# EUROPÄISCHE PATENTANMELDUNG

(11) **EP 4 480 918 A1**
(43) Veröffentlichungstag der Anmeldung: **25.12.2024**
(21) Anmeldenummer: 23180147.3
(22) Anmeldetag: 19.06.2023
(51) Int. Cl.: C01D 1/40, C01D 15/02, C01D 15/04, C25B 1/46, C25B 15/08

(54) **VERFAHREN ZUR GEWINNUNG VON LITHIUMHYDROXID**

(71) Anmelder: SMS group GmbH, 41069 Mönchengladbach (DE)
(72) Erfinder: Weissenbaeck, Herbert, 1010 Wien (AT); Österreicher, Markus, 1050 Wien (AT)
(74) Vertreter: Hemmerich & Kollegen

(57) **Zusammenfassung**

Die vorliegende Anmeldung betrifft ein Verfahren zur Herstellung von Lithiumhydroxid aus einem Lithium-haltigen Ausgangsmaterial, umfassend wenigstens die nachfolgend genannten Schritte:
-A: Umsetzung (12) des Lithium-haltigen Ausgangsmaterials mit Chlorgas zum Erhalt von Lithiumchlorid;
-B: Umsetzung (26) des Lithiumchlorids mit Kaliumhydroxid zum Erhalt einer Lösung von Kaliumhydroxid, Lithiumchlorid, Kaliumchlorid und Lithiumhydroxid in Wasser;
-C: Umsetzung des Kaliumchlorids mittels Chlor-Alkali-Elektrolyse (30) zu Kaliumhydroxid sowie Chlorgas und Wasserstoff;
-D: Gewinnung mindestens des Lithiumhydroxids aus der in Schritt B erhaltenen Lösung.

Der Vorteil des erfindungsgemäßen Verfahrens liegt darin, dass die technisch schwierig umzusetzende Elektrolyse (30) von LiCl vermieden und stattdessen zunächst ein KCI hergestellt wird, welches anschließend nach einem erprobten Verfahren durch Chlor-Alkali-Elektrolyse (30) elektrolysiert werden kann.

## Beschreibung

Die vorliegende Erfindung betrifft ein Verfahren zur Herstellung von Lithiumhydroxid (LiOH) aus einem Lithium-haltigen Ausgangsmaterial, wobei das Verfahren eine Chlor-Alkali-Elektrolyse umfasst.

Lithiumhydroxid wird unter anderem als Ausgangsmaterial für die Herstellung von Lithiumlonen-Akkumulatoren benötigt. Der Bedarf an Lithium für die Herstellung von Batterien, insbesondere für Elektrofahrzeuge ist bereits sehr hoch und wird nach Schätzungen voraussichtlich in den nächsten Jahren bis 2030 von derzeit etwa 500.000 Tonnen pro Jahr auf etwa das Siebenfache von 3,5 Millionen Tonnen pro Jahr steigen. Es werden somit enorme Investitionen in neue Anlagen zur Produktion von Lithiumhydroxid erforderlich, um die notwendigen Kapazitäten zu schaffen, wobei das Lithiumhydroxid bei einer Verwendung in Batterien in einem hohen Reinheitsgrad von insbesondere mehr als 99 % benötigt wird, der als "battery-grade" bezeichnet wird. Wegen der hohen Nachfrage ist der Preis für Lithiumhydroxid (LiOH*H2O) in den letzten beiden Jahren bereits erheblich gestiegen.

Bei den klassischen Methoden zur Herstellung von Lithiumhydroxid wird entweder ein Lithiumcarbonat mit Ca(OH)2 umgesetzt oder Lithiumsulfat wird mit Bariumhydroxid zu Lithiumhydroxid umgesetzt. Es kann auch das als Ausgangsmaterial dienende Lithiumerz mit Schwefelsäure ausgelaugt und mit Ca(OH)2 gereinigt werden, um störende Metallkationen, wie Aluminium-, Eisen-, Calcium-, Magnesium- oder Natrium-Ionen zu entfernen, wobei das zunächst entstehende Lithiumsulfat (Li2SO4) durch Reaktion mit der Lauge zu LiOH umgesetzt wird. Bei diesem herkömmlichen Verfahren ist es nachteilig, dass in der Regel nur Ausbeuten im Bereich von etwa 85 % erzielt werden und das Verfahren aufgrund der Röstprozesse einen ungünstigen CO2-footprint aufweist. Bei der Umsetzung im sauren Bereich werden große Mengen an Schwefelsäure benötigt. Zudem fallen in dem Verfahren große Mengen an Natriumsulfat an, welches ein vergleichsweise geringwertiges Produkt ist.

Alternativ kann das Erz auch alkalisch aufgeschlossen, mit Calciumcarbonat geröstet und mit Calciumhydroxid gereinigt und zu LiOH umgesetzt werden. Bei dieser Variante werden jedoch auch nur Ausbeuten von etwa 90 % erzielt und wegen des Röstens des Erzes ist der Energieverbrauch hoch und der CO2-footprint ist ebenfalls negativ. Zudem ist bei diesem Verfahren der Verbrauch an dem Reagenz Calciumcarbonat hoch.

Man kann auch beim Auslaugen der Lithiumerze anstelle von Schwefelsäure Salzsäure verwenden, jedoch liegt dann die Ausbeute an Lithiumhydroxid in dem Verfahren auch nur bei etwa 85 %. Bei diesem Verfahren entsteht ein nasser, kontaminierter Rückstand. Zudem ist die Elektrolyse des hier beim Auslaugen entstehenden Lithiumchlorid (LiCl) technisch sehr schwierig.

Lithiumsalze können auch aus Zinnwaldit (Lithiumeisenglimmer) gewonnen werden, welches jedoch nur einen geringen Gehalt an Lithiumoxid von etwa 3 % bis 4,5 Gew.-% aufweist, so dass aus etwa 25 Tonnen Zinnwaldit nur etwa 1 Tonne Lithiumcarbonat gewonnen wird, wobei in dem Verfahren große Mengen an Erdgas für den Röstvorgang sowie an Dampf und Kühlwasser verbraucht werden.

Aus der DE 10 2017 221 268 A1 ist ein Verfahren zur Herstellung von Lithiumhydroxid aus lithiumhaltigem Erz mittels Chlorierung und Chloralkali-Prozess bekannt, bei dem man von dem Lithium-Mineral Spodumen, einem Lithium-Aluminium-Silikat, ausgeht, dieses mit Chlor chloriert, dann mit Wasser auslaugt zur Herstellung einer LiCI-Lösung, die insbesondere durch Entfernung von Kationen gereinigt und dann einer Chlor-Alkali-Elektrolyse unterzogen wird, wobei es sich um eine Membran-Elektrolyse handelt, bei der außer LiOH als Nebenprodukte Chlorgas und Wasserstoff entstehen. Bei dem bekannten Verfahren müssen in dem Reinigungsschritt Natrium-, Kalium-, Calcium-, Magnesium- und gegebenenfalls Eisen-Ionen weitestgehend entfernt werden, da die LiCI-Lösung bei der Elektrolyse in hochreiner Form vorliegen muss, das heißt Verunreinigungen dürfen nur noch in einem ppb-Bereich (parts per billion) vorliegen. Aus diesem Grund ist die praktische Umsetzung dieses Verfahrens im industriellen Maßstab sehr schwierig. Es gibt hierzu auch keine Erfahrungen aus vergleichbaren Verfahren, die als Grundlage herangezogen werden könnten.

Die US 11,339,481 B1 beschreibt ein Verfahren zur Herstellung von LiOH, bei dem zunächst eine Kaliumchlorid-Lösung (KCl) elektrolysiert wird, wobei eine KOH-Lösung, eine verdünnte KCl-Lösung, Chlorgas und Wasserstoff entstehen, wobei man danach die KOH-Lösung mit einer LiCl-Lösung zur Reaktion bringt, um ein reziprokes Salz-System zu erzeugen, welches KOH, LiCl, KCl, LiOH und Wasser enthält und man dann das KCl und das LiOH aus dem reziproken Salzsystem ausfällt, um LiOH-Kristalle und KCl-Kristalle zu erhalten. Bei diesem bekannten Verfahren wird das entstehende Chlorgas nicht zur Chlorierung von Lithium-haltigen Erzen, Lehm bzw. Ton oder Schlacken verwendet. Daher ist hier keine Lithiumgewinnung aus primären Rohstoffen gegeben.

Die EP 0571 273 A1 beschreibt ein Verfahren zur Herstellung eines Alkalimetall-Chlorats durch Elektrolyse in einer Membranzelle eines Anolyten, bei dem man eine Salzlake eines Alkalimetallchlorids in einer Chlor-Alkali-Elektrolysezelle elektrolysiert, wobei Chlorgas und eine konzentrierte Lösung des Alkalimetallhydroxids entstehen, man dann dieses Chlorgas und die Lösung des Alkalimetallhydroxids in eine Abbaukolonne überführt und miteinander zur Reaktion bringt und die so erhaltene Salzlösung wiedergewinnt, um sie als Anolyt in der Membranzelle einzusetzen. In der Abbaukolonne reagieren Chlorgas und Alkalihydroxid wie folgt:

6 MeOH + 3 Cl₂ → 3 MeCl + 3 MeClO + 3 H₂O

Es bilden sich somit ein Alkalimetallchlorid und das entsprechende Alkalimetallhypochlorit. Anschließend disproportioniert das Alkalimetallhypochlorit gemäß der folgenden Reaktion:

3 MeClO → 2 MeCl + MeClO₃

Es entsteht somit bei dieser Reaktion neben dem Chlorid noch ein Chlorat des Alkalimetalls. Die Salzlösung wird dann als Anolyt in einer Membranzelle eingesetzt, wobei die Elektrolyse bei einem schwach sauren pH-Wert von 2 bis 5 und einer erhöhten Temperatur von zwischen 50 °C und 100 °C erfolgt. Die bei der Elektrolyse in der Membranzelle erhaltene Alkalimetallhydroxid-Lösung kann in die Abbaukolonne überführt werden, ebenso wie das bei der Elektrolyse entstehende Chlorgas. Im Prinzip geht es bei diesem bekannten zyklischen Prozess um die Herstellung eines Alkalimetallchlorats sowie die Reinigung eines Alkalimetallchlorids mittels der Elektrolyse. Die Gewinnung des Alkalimetallhydroxids steht hingegen nicht im Fokus des Verfahrens.

Ausgehend von dem zuvor geschilderten Stand der Technik besteht die Aufgabe der vorliegenden Erfindung darin, ein verbessertes Verfahren zur Gewinnung von Lithiumhydroxid (LiOH) zur Verfügung zu stellen, bei dem der Energiebedarf und der Verbrauch an Ressourcen hinsichtlich der eingesetzten Substanzen, des Kühlwassers etc. geringer sind, bei dem eine höhere Ausbeute erzielbar ist und die oben geschilderten Nachteile der direkten Elektrolyse von LiCl vermieden werden.

Die Lösung der vorgenannten Aufgabe liefert ein erfindungsgemäßes Verfahren mit den Merkmalen des Anspruchs 1.

Gegenstand der Erfindung ist ein Verfahren zur Herstellung von Lithiumhydroxid aus einem Lithium-haltigen Ausgangsmaterial, umfassend wenigstens die nachfolgend genannten Schritte:
- A: Umsetzung des Lithium-haltigen Ausgangsmaterials mit Chlorgas zum Erhalt von Lithiumchlorid;
- B: Umsetzung des Lithiumchlorids mit Kaliumhydroxid zum Erhalt einer Lösung von Kaliumhydroxid, Lithiumchlorid, Kaliumchlorid und Lithiumhydroxid in Wasser;
- C: Umsetzung des Kaliumchlorids mittels Chlor-Alkali-Elektrolyse zu Kaliumhydroxid sowie Chlorgas und Wasserstoff;
- D: Gewinnung mindestens des Lithiumhydroxids aus der in Schritt B erhaltenen Lösung.

Bei dem erfindungsgemäßen Verfahren wird von einem Lithium-haltigen Ausgangsmaterial, beispielsweise einem Lithium-haltigen Erz ausgegangen und dieses wird zunächst mit Chlorgas zu Lithiumchlorid umgesetzt. Dieses Lithiumchlorid wird jedoch anders als bei bekannten Verfahren nicht selbst einer Chlor-Alkali-Elektrolyse unterzogen, sondern zunächst mit Kaliumhydroxid (KOH) zu LiOH und KCl umgesetzt. Das auf diese Weise erhaltene KCl lässt sich anschließend durch Chlor-Alkali-Elektrolyse elektrolysieren, wobei es sich hier um ein erprobtes Verfahren handelt, welches bereits vielfach in industriellem Maßstab angewandt wird. Die bei der direkten Elektrolyse von LiCl gegebenen Schwierigkeiten treten hier somit nicht auf.

Bei dem erfindungsgemäßen Verfahren wird zwar zunächst aus dem Ausgangsmaterial, wie beispielsweise einem Lithium-haltigen Erz durch Chlorierung ein Lithiumchlorid hergestellt. Dieses Lithiumchlorid ließe sich "theoretisch" mittels Chlor-Alkali-Elektrolyse elektrolysieren, wobei ein LiOH erhalten würde. Diese Elektrolyse wird im Stand der Technik vorgeschlagen, ist jedoch mit erheblichen technischen Schwierigkeiten verbunden, die einer Durchführung im industriellen Maßstab mit vertretbarem Aufwand entgegenstehen und lässt sich nicht in einem wirtschaftlichen sinnvollen Verfahren realisieren. Die Erfindung schlägt daher vor, quasi einen Umweg einzuschlagen und aus dem LiCl zunächst ein KCl herzustellen, welches somit als eine Art Trägermaterial benutzt wird und anstelle des LiCl elektrolysiert wird. Diese Elektrolyse des KCl ist technisch problemlos umzusetzen, wobei auf Erkenntnisse aus langjähriger industrieller Erfahrung in diesem Verfahren zurückgegriffen werden kann. Das als Produkt angestrebte LiOH wird bei der Umsetzung des Lithiumchlorids mit Kaliumhydroxid gemäß Schritt B erhalten und kann aus der dabei entstehenden Lösung gewonnen werden. Bei der anschließenden Elektrolyse des KCl (des Trägermaterials) entsteht zum einen das Kaliumhydroxid, welches bei der Umsetzung gemäß Schritt B benötigt wird, als auch das Chlorgas, welches bei der Chlorierung des Ausgangsmaterials gemäß Schritt A eingesetzt wird. Somit handelt es sich bei dem erfindungsgemäßen Verfahren um eine Art Kreislaufprozess, bei dem im Wesentlichen keine Reagenzien von außen zugeführt werden müssen, die im Verfahren verbraucht werden. Der Energieverbrauch sowie der Verbrauch an Ressourcen werden im Vergleich zu den vorbekannten Verfahren erheblich reduziert.

Gemäß einer bevorzugten Weiterbildung des erfindungsgemäßen Verfahrens wird das in dem Verfahrensschritt C bei der Elektrolyse erhaltene Kaliumhydroxid mindestens teilweise als Edukt in Schritt B bei der Umsetzung mit Lithiumchlorid wieder eingesetzt. Das Kaliumhydroxid wird als Edukt bei der Umsetzung des Lithiumchlorids in Schritt B benötigt, so dass es besonders vorteilhaft ist, wenn das bei der Elektrolyse in Schritt C anfallende Kaliumhydroxid in die Umsetzung gemäß Schritt B zurückgeführt wird.

Eine bevorzugte Weiterbildung des erfindungsgemäßen Verfahrens sieht zudem vor, dass auch das in dem Verfahrensschritt C bei der Elektrolyse entstehende Chlorgas mindestens teilweise als Edukt in Schritt A bei der Umsetzung des Lithium-haltigen Ausgangsmaterials mit Chlorgas wieder eingesetzt wird. Bei der Chlorierung zum Aufschluss des Ausgangsmaterials gemäß Schritt A wird Chlorgas benötigt, welches in Schritt C des Verfahrens erzeugt wird und gemäß dieser bevorzugten Variante des Verfahrens ebenfalls im Prozess selbst wieder eingesetzt werden kann, indem es in die Chlorierung gemäß Schritt A zurückgeführt wird. Durch das direkte Rezirkulieren des Chlorgases ist eine "trockene" Chlorierung möglich. Dadurch entsteht ein trockener, chlorfreier Rückstand, der im Gegensatz zu den herkömmlichen Methoden, die einen feuchten Filterkuchen mit Rückständen des Säureaufschlusses erzeugen, einen verwertbaren Rückstand darstellt.

Gemäß einer bevorzugten Weiterbildung des Verfahrens werden die in Schritt B in der Lösung enthaltenen Substanzen Lithiumhydroxid und Kaliumchlorid aus der Lösung selektiv abgetrennt.

Vorzugsweise werden die in Schritt B in der Lösung enthaltenen Substanzen Lithiumhydroxid und Kaliumchlorid über die reziproke Löslichkeit aus der Lösung abgetrennt.

Insbesondere erfolgt diese selektive Trennung von LiOH und KCl aus der Lösung über die reziproke Löslichkeit jeweils durch Kristallisation dieser Substanzen. Das so entstehende LiOH stellt das Produkt dar. Das ebenfalls entstehende KCl wird durch eine am Markt vielfach erprobte Chlor-Alkali-Elektrolyse gemäß Verfahrensschritt C wieder zu KOH, welches als Edukt benötigt wird, sowie Chlorgas (Cl2) und Wasserstoff (H2) umgesetzt. Das so gewonnene Chlorgas wird vorzugsweise zur Herstellung des LiCl rezykliert und der entstehende Wasserstoff kann bevorzugt für weitere Zwecke verwendet werden.

Bei der selektiven Trennung von LiOH und KCl aus der Lösung durch Kristallisation geht man beispielsweise so vor, dass zunächst in einem ersten Kristallisationsschritt bei einer erhöhten Temperatur T1 das Lithiumhydroxid aus der Lösung auskristallisiert wird und danach in einem zweiten Kristallisationsschritt bei einer Temperatur T2, welche niedriger ist als die Temperatur T1, das Kaliumchlorid aus der nach Abtrennung des Lithiumhydroxid verbliebenen Lösung auskristallisiert wird. Das Lithiumhydroxid hat bei erhöhten Temperaturen eine etwas geringere Löslichkeit in wässriger Lösung als bei niedrigen Temperaturen. Bei dem Kaliumchlorid ist es umgekehrt, die Löslichkeit nimmt mit zunehmender Temperatur nicht unerheblich zu, sie verdoppelt sich in etwa bei Erhöhung der Temperatur der Lösung von beispielsweise etwa 0 °C auf etwa 90 °C. Vorzugsweise wählt man daher für den ersten Kristallisationsschritt eine Temperatur T1 von zwischen etwa 50 °C und etwa 100 °C, vorzugsweise von etwa 70 °C bis etwa 100 °C, bei der das Lithiumhydroxid zum großen Teil ausfällt, während das Kaliumchlorid in Lösung bleibt. Den auskristallisierten Anteil des Lithiumhydroxids kann man dann als Produkt abtrennen. Das Filtrat dieser Lösung kühlt man dann stärker ab, beispielsweise auf eine Temperatur T2 im Bereich von etwa 40 °C bis etwa - 10 °C, vorzugsweise auf etwa 20 °C bis etwa - 10 °C und kristallisiert so einen wesentlichen Anteil des Kaliumchlorids aus der Lösung aus, welches man dann beispielsweise durch Filtration abtrennen kann. Das Filtrat dieses zweiten Kristallisationsschritts, welches noch einen Anteil an Lithiumhydroxid enthält, das zuvor nicht ausgefällt wurde, sowie auch das restliche Kaliumchlorid enthält, kann man dann zurückführen in den ersten Kristallisationsschritt und man kann so in einem weiteren Zyklus weitere Anteile an Lithiumhydroxid aus dieser vereinigten Lösung gewinnen.

Vorzugsweise umfasst das Ausgangsmaterial für das erfindungsgemäße Verfahren in Schritt A ein Lithiumerz, vorzugsweise ein Lithiumerz, welches das Mineral Spodumen enthält. Bei Spodumen handelt es sich um ein Kettensilikat aus der Gruppe der Pyroxene, welches im monoklinen Kristallsystem kristallisiert und die chemische Zusammensetzung LiAl[Si2O6] hat. Spodumen ist ein wichtiges Lithiumerz, welches an diversen Fundorten vorkommt, unter anderem auch im Alpenraum, in Skandinavien, Kanada und Russland und Spodumen bildet teilweise sehr große Kristalle aus.

Lithium kommt auch in Mineralen in Lithium-Pegmatiten vor, beispielsweise sind die Minerale Amblygonit, Lepidolith, Petalit und Kryolithionit zu nennen, wobei diese Minerale in der Regel einen Lithiumgehalt von bis zu 9 Gew.-% aufweisen. Daneben kommt Lithiumchlorid auch in Salzlaugen, zumeist in Salzseen vor und kann ebenfalls zur Gewinnung von Lithiumhydroxid eingesetzt werden.

Eine bevorzugte Weiterbildung des erfindungsgemäßen Verfahrens sieht vor, dass der bei der Umsetzung des Kaliumchlorids mittels Chlor-Alkali-Elektrolyse zu Kaliumhydroxid entstehende Wasserstoff wenigstens teilweise als Energieträger zur Erzeugung von Prozesswärme im Verfahren selbst oder einem anderen Verfahren und/oder als Edukt in einem anderen Umsetzungsprozess verwendet wird.

Vorzugsweise umfasst das Ausgangsmaterial für das erfindungsgemäße Verfahren in Schritt A mindestens einen Lehm, einen Ton oder eine Schlacke. Bei dieser bevorzugten Variante des Verfahrens können somit für die Gewinnung des Lithiumchlorids in Schritt A teilweise oder gegebenenfalls auch ausschließlich Ausgangsmaterialien eingesetzt werden, die weniger hochwertig sind als Lithiumerze und die gegebenenfalls nur einen geringeren Gehalt an Lithium aufweisen als beispielsweise Spodumen. Die weltweite Nachfrage nach Lithium ist wegen der Verwendung in Akkumulatoren für Elektrofahrzeuge sehr hoch, weshalb es wirtschaftlich sinnvoll ist, auch Lehm, Ton oder auch Schlacken beispielsweise aus metallurgischen Prozessen für die Gewinnung bzw. Rückgewinnung von Lithium zu nutzen. Bei teilweisem oder vollständigen Einsatz dieser Ausgangsmaterialien in dem erfindungsgemäßen Verfahren erfolgt in Schritt A analog zur Vorgehensweise beim Einsatz von Lithiumerzen ein Aufschluss mit Chlorgas zur Gewinnung von Lithiumchlorid. Daher können Lehm, Ton oder Schlacke auch gemeinsam im Gemisch mit Lithiumerzen als Ausgangsmaterial in dem Verfahren eingesetzt werden.

Eine bevorzugte Weiterbildung des erfindungsgemäßen Verfahrens sieht vor, dass das Verfahren wenigstens einen dem Verfahrensschritt A vorgeschalteten Verfahrensschritt umfasst, in dem das Ausgangsmaterial aufbereitet wird, insbesondere in dem das Ausgangsmaterial kalziniert wird. Bevor in dem Verfahrensschritt A die Chlorierung des Lithium-haltigen Ausgangsmaterials erfolgt, ist eine Kalzinierung vorteilhaft. Bei dieser Kalzinierung handelt es sich um eine Wärmebehandlung in der Regel in Gegenwart von Luft oder Sauerstoff. Wenn es sich bei dem Ausgangsmaterial beispielsweise um ein Lithium-haltiges Erz handelt, können auf diese Weise flüchtige Komponenten abgetrennt werden und/oder durch eine thermische Zersetzung können beispielsweise einzelne Komponenten aufgeschlossen werden.

Eine bevorzugte Weiterbildung des erfindungsgemäßen Verfahrens sieht zwischen der Chlorierung gemäß Schritt A und der Umsetzung des Lithiumchlorids mit Kaliumhydroxid gemäß Schritt B wenigstens einen Schritt A1 vor, in dem eine Reinigung des Lithiumchlorids erfolgt. Bei der Chlorierung gemäß Schritt A wird in der Regel ein Gemisch enthalten, welches neben dem Lithiumchlorid weitere Metallchloride sowie andere Komponenten wie beispielsweise Silikate enthält. In einem oder mehreren Reinigungsschritten gemäß A1 können diese Komponenten abgetrennt werden, wobei man bevorzugt zunächst solche Komponenten abtrennt, bei denen es sich nicht um Metallchloride handelt, wobei sich nach dieser Abtrennung ein Gemisch von Metallchloriden ergibt, in dem auch das Lithiumchlorid enthalten ist, welches dann vorzugsweise in wenigstens einem weiteren Schritt weiter gereinigt wird, um ein Lithiumchlorid in einem gewünschten Reinheitsgrad für die weitere Umsetzung in den nachfolgenden Verfahrensschritten zu erhalten.

Eine bevorzugte Weiterbildung des erfindungsgemäßen Verfahrens sieht vor, dass die Reinigung des Lithiumchlorids gemäß Schritt A1 wenigstens einen Trennschritt umfasst, in dem Nebenprodukte von bei der Chlorierung entstandenen Metallchloriden abgetrennt werden. Bei diesen nicht chloridischen Nebenprodukten kann es sich, wenn man von einem Lithium-haltigen Erz als Ausgangsmaterial ausgeht, beispielsweise um wenigstens ein Silikat, insbesondere um ein Aluminiumsilikat oder um einen Zeolith handeln.

Eine bevorzugte Weiterbildung des erfindungsgemäßen Verfahrens sieht vor, dass der Trennschritt A1 eine Behandlung in einem Vakuumverdampfer umfasst. Bei einem solchen Trennschritt werden Chloride in einer Gasphase erhalten, während die weniger flüchtigen Silikate vorzugsweise in einer Feststoffphase verbleiben, die von der Gasphase abgetrennt werden kann.

Eine bevorzugte Weiterbildung des erfindungsgemäßen Verfahrens sieht vor, dass nach einem Trennschritt, beispielsweise mittels eines Vakuumverdampfers, in einer Gasphase vorliegende Metallchloride in einem Schritt A2 mit Wasser kondensiert werden und danach in wässriger Lösung vorliegen. Diese wässrige Lösung enthält dann in vorteilhafter Weise das Lithiumchlorid sowie weitere Metallchloride jeweils als Salze in gelöster Form, so dass diese anschließend von dem Lithiumchlorid getrennt werden können.

Eine bevorzugte Weiterbildung des erfindungsgemäßen Verfahrens sieht somit nach einem Trennschritt A1 wenigstens einen weiteren Trennschritt A2 vor, in dem in wässriger Lösung vorliegende Metallsalze, insbesondere Metallchloride von Lithiumchlorid abgetrennt werden.

Eine bevorzugte Weiterbildung des erfindungsgemäßen Verfahrens sieht vor, dass in diesem Trennschritt A2 die Metallchloride durch Fällung von dem Lithiumchlorid abgetrennt werden. Nach dieser Fällung wird ein Lithiumchlorid in einem ausreichenden Reinheitsgrad erhalten, welches vorzugsweise in einer wässrigen Lösung vorliegt und welches nun in Schritt B des erfindungsgemäßen Verfahrens mit Kaliumhydroxid umgesetzt werden kann, zum Erhalt einer Lösung von Kaliumhydroxid, Lithiumchlorid, Kaliumchlorid und Lithiumhydroxid in Wasser. Diese Umsetzung kann beispielsweise in einem Reaktionsbehälter erfolgen, in dem nach der Umsetzung das in Lösung vorliegenden Produkt Lithiumhydroxid sowie gegebenenfalls auch das Kaliumchlorid durch reziproke Fällung selektiv kristallisiert werden können. Das ausgefällte Lithiumhydroxid liegt dann vorzugsweise als Feststoff in kristalliner Form vor, wird aus dem Reaktionsbehälter abgetrennt und bei Bedarf anschließend gegebenenfalls in einem oder mehreren Schritten weiter gereinigt. Das im Reaktionsbehälter anfallende Kaliumchlorid kann auch beispielsweise in wässriger Lösung vorliegend aus dem Reaktionsbehälter direkt in eine Elektrolysevorrichtung überführt werden, in der die nachfolgende Chlor-Alkali-Elektrolyse des Kaliumchlorids gemäß Schritt C des erfindungsgemäßen Verfahrens erfolgt.

### Figurenbezeichnung

Die Erfindung sowie das technische Umfeld werden nachfolgend anhand der Figuren näher erläutert. Es ist darauf hinzuweisen, dass die Erfindung durch die gezeigten Ausführungsbeispiele nicht beschränkt werden soll. Insbesondere ist es, soweit nicht explizit anders dargestellt, auch möglich, Teilaspekte der in den Figuren erläuterten Sachverhalte zu extrahieren und mit anderen Bestandteilen und Erkenntnissen aus der vorliegenden Beschreibung und/oder Figuren zu kombinieren. Insbesondere ist darauf hinzuweisen, dass die Figuren und insbesondere die dargestellten Größenverhältnisse nur schematisch sind. Gleiche Bezugszeichen bezeichnen gleiche Gegenstände, so dass ggf. Erläuterungen aus anderen Figuren ergänzend herangezogen werden können. Es zeigen:
Figur 1 ein mögliches Verfahrensschema für die Gewinnung von Lithiumhydroxid aus einem Lithium-haltigen Ausgangsmaterial gemäß einem Ausführungsbeispiel der vorliegenden Erfindung; und
Figur 2 ein Blockfließdiagramm eines beispielhaften erfindungsgemäßen Verfahrens mit den Massenströmen.

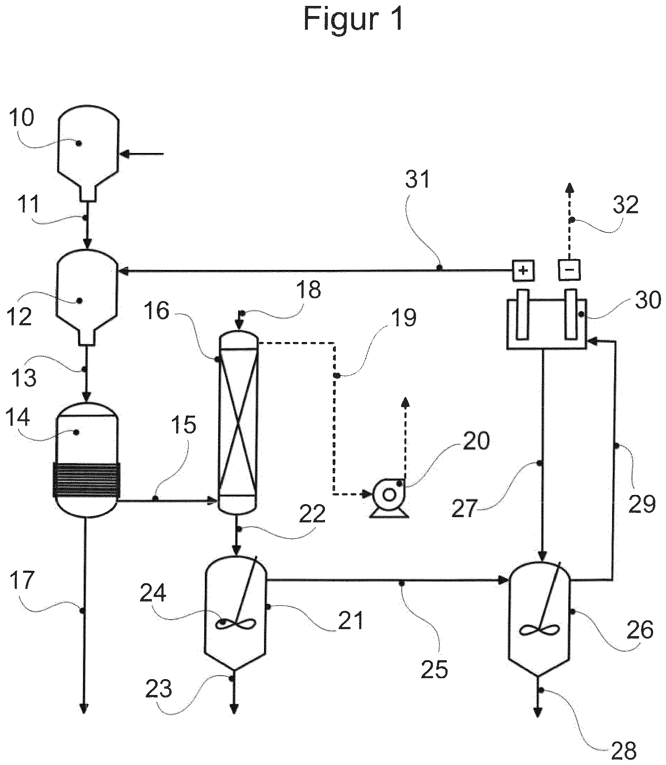

Nachfolgend wird anhand des Verfahrensschemas von Figur 1 ein beispielhaftes erfindungsgemäßes Verfahren zur Gewinnung von Lithiumhydroxid aus einem Lithium-haltigen Ausgangsmaterial erläutert. Es wird in dem Verfahren ausgegangen von einem Lithium-haltigen Erz wie beispielsweise Spodumen, welches in einen Behälter 10 eingebracht wird und in einem ersten Schritt in diesem Behälter 10 aktiviert wird, indem eine Kalzinierung vorgenommen wird. Die Kalzinierung kann beispielsweise bei Umgebungsdruck und bei Temperaturen im Bereich von beispielsweise 1100 °C bis 1500 °C für die Zeitdauer von etwa einer Stunde durchgeführt werden. Das Spodumen, von dem ausgegangen wird, kann in verschiedenen Modifikationen vorliegen, insbesondere als α, β oder γ-Spodumen, wobei nach der Aktivierung ein aktiviertes β oder γ-Spodumen vorliegt.

Das aktivierte Spodumen wird dann über die Leitung 11 in einen zweiten Behälter 12 überführt, in dem eine trockene Chlorierung des Spodumens mittels Chlorgas durchgeführt wird. Die Chlorierung kann beispielsweise bei einem Druck von 1 bar (a) und einer Temperatur im Bereich von etwa 1000 °C bis etwa 1100 °C vorgenommen werden, bei einer Behandlungszeitdauer von beispielsweise etwa zwei Stunden. Nach der Chlorierung wird das chlorierte Spodumen über die Leitung 13 in einen Vakuumverdampfer 14 überführt, in dem eine Auftrennung der bei der Chlorierung entstandenen Produkte bei verringertem Druck von beispielsweise etwa 20 mbar (a) bis etwa 50 mbar (a) und beispielsweise bei einer Temperatur von ungefähr 1050 °C erfolgt, wobei zum einen als Hauptprodukt der Chlorierung Metallchloride entstehen, die über die Leitung 15 aus dem Vakuumverdampfer 14 in einen Kondensator 16 verbracht werden, während die als wertvolle Nebenprodukte im Vakuumverdampfer 14 anfallenden Aluminiumsilikate oder Zeolithe abgetrennt und über eine weitere Leitung 17 im unteren Bereich aus dem Vakuumverdampfer 14 abgeführt werden, wobei sie ein kommerziell handelbares Produkt bilden und daher zur Wertschöpfung des Verfahrens insgesamt beitragen können.

Die Metallchloride, die in dem Vakuumverdampfer 14 verdampft werden, gelangen in den Kondensator 16, dem über die Leitung 18 Wasser zugeführt wird und in dem die Metallchloride als Salze in wässriger Lösung gelöst werden. Gegebenenfalls kann Wasserdampf über eine Leitung 19, an die eine Vakuumpumpe 20 angeschlossen ist, aus dem Kondensator 16 abgeführt werden. Die kondensierten gelösten Metallchloride werden anschließend über die Leitung 22 in einen weiteren Behälter 21 überführt, in dem die Ausfällung von Verunreinigungen erfolgt, die über die Leitung 23 aus dem Behälter 21 abgeführt werden können. Dieser Behälter 21 für die Ausfällung der Verunreinigungen ist vorzugsweise mit einer Rührvorrichtung 24 ausgestattet, so dass eine Durchmischung des in diesem Behälter 21 enthaltenen Mediums möglich ist. Von diesem Behälter 21 geht eine weitere Leitung 25 aus, über die die nach Abtrennung der Verunreinigungen gereinigte wässrige Lösung abgeführt werden kann, welche das LiCl in einer Konzentration von beispielsweise etwa 30 Gew.-% bis etwa 40 Gew.-%, vorzugsweise mit einem LiCI-Gehalt im Bereich von etwa 35 Gew.-%, enthält. Diese LiCI-Lösung wird über die Leitung 25 einem Reaktionsbehälter 26 zugeführt, in dem die Umsetzung des LiCl mit KOH gemäß Schritt B des erfindungsgemäßen Verfahrens erfolgt.

Bei diesem Umsetzungsschritt B in dem Reaktionsbehälter 26 entsteht eine Lösung von Kaliumhydroxid, Lithiumchlorid, Kaliumchlorid und Lithiumhydroxid in Wasser. Das für die Reaktion mit dem LiCl benötigte KOH kann dem Reaktionsbehälter 26 über die Leitung 27 in Form einer wässrigen alkalischen Lösung von KOH zugeführt werden, welche im Prozess selbst bei der Elektrolyse erzeugt wird. Der Reaktionsbehälter 26 dient als Kristallisator, in dem die verschiedenen in der Lösung enthaltenen Salze jeweils separat ausgefällt werden können. Das gewünschte Produkt dieser Reaktion in dem Reaktionsbehälter 26 ist das LiOH, welches nach der Ausfällung über die Leitung 28 aus dem Behälter abgeführt werden kann. Das bei der Reaktion ebenfalls erhaltene KCl wird über die reziproke Löslichkeit selektiv kristallisiert und aus dem Reaktionsbehälter 26 abgeführt und über die Leitung 29 der Elektrolysevorrichtung 30 zugeführt.

In der Elektrolysevorrichtung 30 erfolgt die Chlor-Alkali-Elektrolyse des KCl gemäß Schritt C des erfindungsgemäßen Verfahrens. Dabei wird das KCI zu KOH umgesetzt, wobei außerdem Chlorgas und Wasserstoff entstehen. Das in der Elektrolysevorrichtung an der Anode entstehende Chlorgas wird über die Leitung 31 dem zweiten Behälter 12 zugeführt, in dem die trockene Chlorierung des Ausgangsmaterials, beispielsweise des Spodumens, erfolgt. Der in der Elektrolysevorrichtung 30 an der Kathode entstehende Wasserstoff kann über die Leitung 32 abgeführt und einer anderen Verwendung zugeführt werden, wobei der Wasserstoff beispielsweise als Energieträger oder als Edukt in einem anderen Prozess dienen kann. Die bei der Elektrolyse in der Elektrolysevorrichtung 30 erzeugte KOH-Lösung wird über die Leitung 27 dem Reaktionsbehälter 26 zugeführt, in dem die selektive Kristallisation und Trennung von LiOH und KCI erfolgt. Auf diese Weise werden auch das KOH ebenso wie das bei der Elektrolyse entstehende Chlorgas im Prozess selbst wieder eingesetzt, so dass es sich insgesamt um einen Kreislaufprozess handelt, bei dem keine zusätzlichen Reagenzien von außerhalb zugeführt werden müssen.

### Beispiel

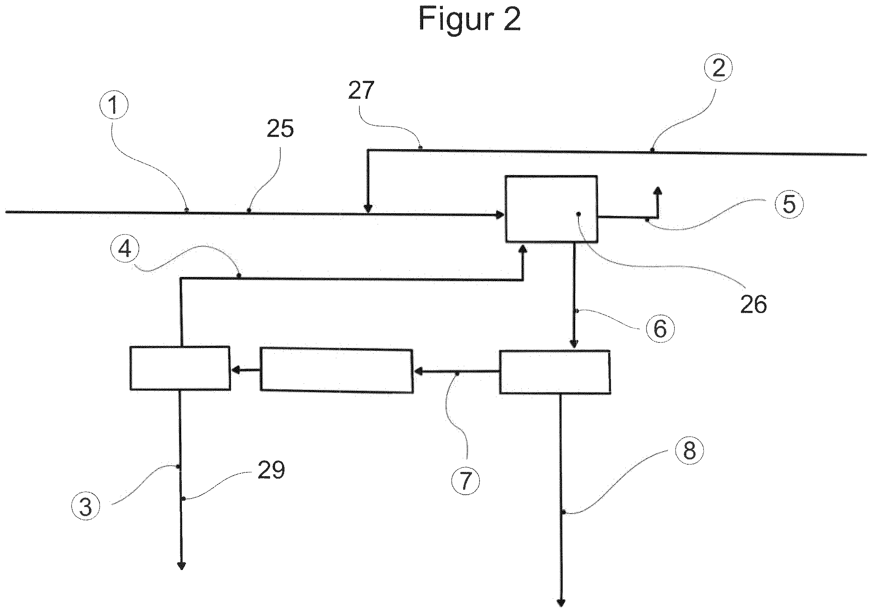

In dem nachfolgenden Beispiel werden beispielhafte Reaktionsbedingungen und Stoffströme bei der Durchführung der Umsetzung gemäß Schritt B des erfindungsgemäßen Verfahrens näher erläutert. Die Figur 2, auf die nachfolgend Bezug genommen wird, zeigt eine schematische Darstellung der Stoffströme bei der Umsetzung in dem Reaktionsbehälter 26, in dem die zuvor beschriebene Umsetzung des Lithiumchlorids mit Kaliumhydroxid gemäß Schritt B und die anschließende Kristallisation des Lithiumhydroxids (hier beispielhaft für 1 kg erläutert) erfolgen. Es sind dabei jeweils die Stoffströme in den Reaktionsbehälter 26 hinein bzw. aus diesem heraus dargestellt.

Über die Leitung 25 gelangt eine wässrige Lithiumchlorid-Salzlösung mit 40 Gew-% LiCl in den Reaktionsbehälter 26, wobei der gesamte Stoffstrom eine Masse von 2,8 kg aufweist. Zudem wird dem Reaktionsbehälter 26 über die Leitung 27 eine wässrige Kaliumhydroxid-Lösung mit 30 Gew.-% zugeführt. Der gesamte Stoffstrom, der dem Reaktionsbehälter 26 über die Leitung 27 zugeführt wird, beträgt 4,9 kg. Der bei der Umsetzung in dem Reaktionsbehälter 26 erhaltene mit Kaliumchlorid angereicherte Stoffstrom 3, welcher unter Ausnutzung der reziproken Löslichkeit durch selektives Auskristallisieren mit Kaliumchlorid angereichert wurde und aus dem Reaktionsbehälter 26 abgeführt und über die Leitung 29 der Elektrolysevorrichtung 30 zugeführt wird, weist eine Gesamtmasse von 2 kg auf, wobei der Anteil an Kaliumchlorid 97 Gew.-% beträgt. Das nach der Abtrennung des KCl gemäß Stoffstrom 3 erhaltene Filtrat, welches überwiegend Wasser enthält, kann zur weiteren Abtrennung der darin noch enthaltenen Restsalze in den Reaktionsbehälter 26 rezykliert werden. Dieser Stoffstrom 4 weist eine Gesamtmasse von 18,4 kg auf, wobei der Anteil an Lithiumhydroxid 8 Gew.-% und der Anteil an Kaliumchlorid 17 Gew.-% beträgt. Der zur Kristallisation dienende Reaktionsbehälter 26 kann beispielsweise am Siedepunkt der Salzlösung (bei einer Temperatur von etwa 100 - 105 °C) betrieben werden. Aus den genannten Lösungen entsteht im Reaktionsbehälter 26 auch eine Dampfphase, die praktisch ausschließlich aus Wasserdampf besteht. In dem vorliegenden Ausführungsbeispiel entsteht ein aus dem Reaktionsbehälter 26 abgeführter Dampfstrom (Stoffstrom 5) mit 4,5 kg Wasserdampf.

Aus dem Reaktionsbehälter 26 kann zunächst eine Suspension als Stoffstrom 6 abgeführt werden, die sowohl das Produkt Lithiumhydroxid als auch das Kaliumchlorid enthält, wobei diese Suspension 10 Gew.-% LiOH enthält, welches über der Löslichkeitsgrenze als Feststoff (LiOH*H2O) vorliegt.

Über eine Fest/Flüssig-Trennung kann der Stoffstrom 6 aufgetrennt werden, wobei ein Filtrat entsteht, welches überwiegend das Kaliumchlorid mit einem Anteil von 25 Gew.-% enthält. Der Anteil an Lithiumhydroxid in dem Stoffstrom 7, der hierbei eine Gesamtmasse von 20 kg aufweist beträgt 7 Gew-%. Das bei der Fest/Flüssig-Trennung als Feststoff abgetrennte Produkt Lithiumhydroxid wird als Stoffstrom 8 abgeführt. Dieser besteht aus dem Feststoff LiOH*H2O (Reinheit >99 Gew.-%) und einer gewissen Restfeuchte. Der Anteil der Restfeuchte beispielsweise zwischen 3 und 10 Gew.-% ist abhängig von der eingesetzten Filtrationsmethode. Vorzugsweise wählt man eine Zentrifuge und erreicht so eine Restfeuchte zwischen 3 und 5 Gew.-%.

Aus der Filtratlösung gemäß Stoffstrom 7 wird sodann das Kaliumchlorid auskristallisiert bei tiefer Temperatur, beispielsweise im Bereich von etwa 0 °C und die erhaltene Suspension wird durch eine Fest-Flüssig-Trennung aufgetrennt. Der so erhaltene Feststoff (Stoffstrom 3), im vorliegenden Beispiel 1,9 kg (KCI) mit einem hohen Reinheitsgrad von >98 Gew.-% wird sodann in die Elektrolysevorrichtung 30 geleitet. Das entstehende Filtrat (Stoffstrom 4), eine Salzlösung, in diesem Fall 18,4 kg mit einem Gehalt von 17 Gew.-% KCI und 7,5 Gew.-% LiOH wird als Rezyklat dem Reaktionsbehälter 26 zugeführt.

### Bezugszeichen

- 1: Stoffstrom
- 2: Stoffstrom
- 3: Stoffstrom
- 4: Stoffstrom
- 5: Stoffstrom
- 6: Stoffstrom
- 7: Stoffstrom
- 8: Stoffstrom
- 10: Behälter
- 11: Leitung
- 12: Behälter
- 13: Leitung
- 14: Vakuumverdampfer
- 15: Leitung
- 16: Kondensator
- 17: Leitung
- 18: Leitung
- 19: Leitung
- 20: Vakuumpumpe
- 21: Behälter für die Ausfällung
- 22: Leitung
- 23: Leitung
- 24: Rührvorrichtung
- 25: Leitung
- 26: Reaktionsbehälter
- 27: Leitung
- 28: Leitung
- 29: Leitung
- 30: Elektrolysevorrichtung
- 31: Leitung
- 32: Leitung

## Patentansprüche

1. Verfahren zur Herstellung von Lithiumhydroxid aus einem Lithium-haltigen Ausgangsmaterial, umfassend wenigstens die nachfolgend genannten Schritte:
- A: Umsetzung des Lithium-haltigen Ausgangsmaterials mit Chlorgas zum Erhalt von Lithiumchlorid;
- B: Umsetzung des Lithiumchlorids mit Kaliumhydroxid zum Erhalt einer Lösung von Kaliumhydroxid, Lithiumchlorid, Kaliumchlorid und Lithiumhydroxid in Wasser;
- C: Umsetzung des Kaliumchlorids mittels Chlor-Alkali-Elektrolyse zu Kaliumhydroxid sowie Chlorgas und Wasserstoff;
- D: Gewinnung mindestens des Lithiumhydroxids aus der in Schritt B erhaltenen Lösung, wobei
das in dem Verfahrensschritt C bei der Elektrolyse entstehende Chlorgas mindestens teilweise als Edukt in Schritt A bei der Umsetzung des Lithium-haltigen Ausgangsmaterials mit Chlorgas eingesetzt wird.

2. Verfahren nach Anspruch 1, **dadurch gekennzeichnet, dass** das in dem Verfahrensschritt C bei der Elektrolyse erhaltene Kaliumhydroxid mindestens teilweise als Edukt in Schritt B bei der Umsetzung mit Lithiumchlorid eingesetzt wird.

3. Verfahren nach einem der Ansprüche 1 oder 2, **dadurch gekennzeichnet, dass** die in Schritt B in der Lösung enthaltenen Substanzen Lithiumhydroxid und Kaliumchlorid aus der Lösung selektiv abgetrennt werden.

4. Verfahren nach Anspruch 3, **dadurch gekennzeichnet, dass** die in Schritt B in der Lösung enthaltenen Substanzen Lithiumhydroxid und Kaliumchlorid über die reziproke Löslichkeit aus der Lösung abgetrennt werden.

5. Verfahren nach Anspruch 3 oder 4, **dadurch gekennzeichnet, dass** die die in Schritt B in der Lösung enthaltenen Substanzen Lithiumhydroxid und Kaliumchlorid aus der Lösung selektiv jeweils durch Kristallisation abgetrennt werden.

6. Verfahren nach Anspruch 5, **dadurch gekennzeichnet, dass** zunächst in einem ersten Kristallisationsschritt bei einer erhöhten Temperatur T1 das Lithiumhydroxid aus der Lösung auskristallisiert wird und danach in einem zweiten Kristallisationsschritt bei einer Temperatur T2, welche niedriger ist als die Temperatur T1, das Kaliumchlorid aus der nach Abtrennung des Lithiumhydroxid verbliebenen Lösung auskristallisiert wird.

7. Verfahren nach einem der Ansprüche 1 bis 6, **dadurch gekennzeichnet, dass** das Ausgangsmaterial in Schritt A ein Lithiumerz umfasst, vorzugsweise ein Lithiumerz, welches das Mineral Spodumen enthält.

8. Verfahren nach einem der Ansprüche 1 bis 7, **dadurch gekennzeichnet, dass** das Ausgangsmaterial in Schritt A mindestens einen Lehm, einen Ton oder eine Schlacke umfasst.

9. Verfahren nach einem der Ansprüche 1 bis 8, **dadurch gekennzeichnet, dass** der bei der Umsetzung des Kaliumchlorids mittels Chlor-Alkali-Elektrolyse zu Kaliumhydroxid entstehende Wasserstoff wenigstens teilweise als Energieträger zur Erzeugung von Prozesswärme im Verfahren selbst oder einem anderen Verfahren und/oder als Edukt in einem anderen Umsetzungsprozess verwendet wird.

10. Verfahren nach einem der Ansprüche 1 bis 9, **dadurch gekennzeichnet, dass** dieses wenigstens einen dem Verfahrensschritt A vorgeschalteten Verfahrensschritt umfasst, in dem das Ausgangsmaterial aufbereitet wird, insbesondere in dem das Ausgangsmaterial kalziniert wird.

11. Verfahren nach einem der Ansprüche 1 bis 10, **dadurch gekennzeichnet, dass** zwischen der Chlorierung gemäß Schritt A und der Umsetzung des Lithiumchlorids mit Kaliumhydroxid gemäß Schritt B wenigstens ein Schritt A1 vorgesehen ist, in dem eine Reinigung des Lithiumchlorids erfolgt.

12. Verfahren nach Anspruch 11, **dadurch gekennzeichnet, dass** die Reinigung des Lithiumchlorids gemäß Schritt A1 wenigstens einen Trennschritt umfasst, in dem Nebenprodukte von bei der Chlorierung entstandenen Metallchloriden abgetrennt werden.

13. Verfahren nach Anspruch 12, **dadurch gekennzeichnet, dass** in dem Trennschritt A1 wenigstens ein Silikat, insbesondere ein Aluminiumsilikat oder ein Zeolith abgetrennt wird.

14. Verfahren nach einem der Ansprüche 12 oder 13, **dadurch gekennzeichnet, dass** der Trennschritt A1 eine Behandlung in einem Vakuumverdampfer umfasst.

15. Verfahren nach einem der Ansprüche 12 bis 14, **dadurch gekennzeichnet, dass** nach einem Trennschritt in einer Gasphase vorliegende Metallchloride in einem Schritt A2 mit Wasser kondensiert werden und danach in wässriger Lösung vorliegen.

16. Verfahren nach einem der Ansprüche 12 bis 15, **dadurch gekennzeichnet, dass** nach einem Trennschritt A1 wenigstens ein weiterer Trennschritt A2 vorgesehen ist, in dem in wässriger Lösung vorliegende Metallsalze, insbesondere Metallchloride von Lithiumchlorid abgetrennt werden.

17. Verfahren nach Anspruch 16, **dadurch gekennzeichnet, dass** in dem Trennschritt A2 die Metallchloride durch Fällung von dem Lithiumchlorid abgetrennt werden.
